Europäisches Patentamt

(19) European Patent Office

Office européen des brevets

(11) Publication number: **0 161 940**
**B1**

## (12) EUROPEAN PATENT SPECIFICATION

(45) Date of publication of patent specification: **27.12.90**

(21) Application number: **85303454.4**

(22) Date of filing: **16.05.85**

(51) Int. Cl.⁵: **G 01 S 3/08,** G 01 S 5/04,
H 01 Q 21/20

(54) Radio direction finding for locating lightening ground strikes.

(30) Priority: **17.05.84 GB 8412542**

(43) Date of publication of application:
**21.11.85 Bulletin 85/47**

(45) Publication of the grant of the patent:
**27.12.90 Bulletin 90/52**

(84) Designated Contracting States:
**AT BE CH DE FR GB IT LI LU NL SE**

(56) References cited:
**FR-A-2 198 148**
**FR-A-2 216 588**
**FR-A-2 389 901**
**US-A-2 586 342**
**US-A-3 715 660**
**US-A-4 023 408**
**US-A-4 115 732**

**L'ONDE ELECTRIQUE, vol. 52, no. 2, February
1972, pages 86-92, Paris, FR; M. TIXIER:
"Goniométrie des éclairs sous forme numérique
- applications"**

(73) Proprietor: **Electricity Association Services
Limited
30 Millbank
London SW1P 4RD (GB)**

(72) Inventor: **Scott, Laura Janet
Fairfields Cross Lanes
Oscroft Nr. Chester Cheshire (GB)**

(74) Representative: **Cross, Rupert Edward Blount
et al
BOULT, WADE & TENNANT 27 Furnival Street
London EC4A 1PQ (GB)**

Courier Press, Leamington Spa, England.

## Description

The present invention relates to lightning strike direction finding apparatus.

Lightning strikes to ground cause considerable damage to electrical installations and to other property. It is therefore of interest to electricity supply authorities and others to know of the location of such strikes, their strength and to be able to plot movement of electrical storms. Lightning strikes are powerful emitters of radio frequency energy and radio direction finding techniques are used to locate the strike positions, but these techniques are of limited accuracy.

Lightning radio emission has a peak source energy in the 5 to 6 kHz frequency region with a total band width extending from a few Hz to hundreds of MHz. Lightning radio direction finders have traditionally operated in the 9 to 20 kHz part of the spectrum as such frequencies propagate with minimum attenuation to great distances.

Because of the constraints imposed by the very long wavelengths at such frequencies, the only practical direction finding aerials which can be used are vertical loops usually of a square metre or more in area. Commonly, two such loops are used, arranged orthogonally so that the horizontal magnetic (H) field of a vertically polarised (E) field wave will produce differing voltages proportional to the cosine of the angle of the wave direction with respect to the plane of each loop. Dividing one voltage by the other then gives the tangent of the wave bearing angle with respect to the plane of one of the loops.

Whilst it is widely used this simple approach is prone to two fundamental errors. These are (a) that the loops also have directivity in the vertical (elevation) as well as the horizontal (azimuth) directions and that (b) when a wave is incident close to the normal to the plane of a loop the induced voltage in that loop is small relative to that in the other loop and subject to noise and measurement errors. Thus there are effectively four dead zones of ±5°, normal to the planes of the loops, in which the system cannot be used.

Limitation (a) is the most serious as it has long been known that due to the way in which the radio frequency is generated by a lightning strike and to ionspheric reflections there are present at a direction finding antenna horizontally polarised down coming waves and that these are the cause of azimuth bearing errors of up to 10° or more. This is the so called "polarisation error".

US—A—4023408 and US—A—4115732 disclose known apparatus for mapping storms by the detection of electrical activity from lightning, and for determining the range and direction of lightning discharges to ground, respectively.

In US—A—3715660 there is disclosed a lightning strike direction finding apparatus comprising antenna means responsive to the magnetic field of vertically polarised electrical fields of radio frequency energy radiation from a lightning strike to provide radio frequency signals, a processing unit, and filter means by way of which said radio frequency signals are transmitted to the processing unit.

According to this invention such apparatus is characterised in that the antenna means comprises three or more loop antennas arranged in vertical planes, with at least two in planes at angles other than orthogonal with any third one, the filter means being arranged to discriminate against signals at frequencies above a frequency corresponding to the earth-ionosphere waveguide cut-off frequency for the magnetic fields of horizontally polarised electrical fields of radio frequency energy radiation from the lightning strike, the processing unit being located so as to minimise magnetic field disturbance at the antenna means and the processing unit being arranged to provide signals dependent upon the amplitudes of the radio frequency signals received from the antenna means and to calculate the bearing of the lightning strike from the amplitudes of the radio frequency signals received.

It has been shown that in locating lightning strikes to ground by prior art radio direction finding techniques the main source of azimuth bearing error is due to the presence of horizontally polarised down coming wave components which acting with the main vertically polarised wave produce error voltages in the direction finding loops. It has further been shown that these errors are systematic and have limiting values of ± 90°.

The radio wave from a lightening strike travels in the space between the earth's surface and the lower surface of the ionosphere. It is thus constrained to propagate in all directions radially outwards from the source in a waveguide formed by the earth's surface and the ionosphere. This waveguide is bounded only by these two surfaces and thus has only one cut off wavelength governed by the height of the ionosphere above the earth which is typically 80 km. From waveguide theory this dimension is the half wavelength for the lowest frequency which will propagate through the waveguide and corresponds to a frequency of 1.875 kHz. Further, because the restriction on the waveguide dimension is in the vertical direction only, then this cut off frequency applies only to any horizontally polarised component of the wave and the vertically polarised component can propagate freely in all directions from the source.

The present invention makes use of the natural filtering action by which the horizontally polarised component of the radio frequency wave generated by a lightening strike is substantially absent if the operating frequency of the direction finding unit is low enough relative to the earth-ionosphere waveguide cut off frequency. In this way the so called polarisation error can be substantially eliminated.

In practice the effective height of the ionosphere varies seasonally and diurnally but it has been found that provided the upper frequency limit of the receiving equipment is held below about 2.6 kHz then the attenuating action on the horizontally polarised component is effective. In practice the filter means may be arranged to have a pass band from about 1.4 kHz to 2.6 kHz. Such an arrangement provides an improvement in bearing accuracy relative to prior art equipment operating at 9.5 to 10.5 kHz of approximately 20:1.

The arrangement of the loop antennas eliminates the so-called "dead zones" of limitation (b) mentioned above. Preferably, there are three loop antennas in vertical planes which are equi-angularly distributed. In this case the maximum voltage ratio between the two largest signals from the loop antennas is 2:1. Conveniently, the three loop voltages are used to determine the bearing of the source but the smallest voltage is automatically arranged never to be used as a divisor or as a multiplier in the bearing equation. In this manner even when the wave direction is normal to the plane of one loop (producing zero voltage in that loop) the voltages in the other two loops are relatively large and the dead zones does not occur.

Normally, the loop antennas of the above referred trigonal arrangement are mutually positioned relative to one another to minimise magnetic coupling between any two of the loop antennas. For this purpose, each loop may be positioned with its vertical plane substantially tangential to each of the three magnetic fields produced by currents in each of the other loops. Desirably, the vertical plane of each loop is tangential with each said field at a point of contact which is displaced from the centre of the loop towards the loop producing the respective field.

Preferably there is a respective aerial amplifier for amplifying the radio frequency signal from each loop antenna and cable means for feeding the amplified radio frequency signals from the antenna means to the processing unit. This predetermined distance is preferably at least 50 metres.

Preferably, the processing unit operates on a d.c. supply from a modem unit. The modem unit is then preferably at least half a kilometre from the antenna means and is the closest approach of the mains electric supply. The processing unit transmits calculated bearing data to the modem unit for onward transmission to a central control station.

In a preferred embodiment, the antenna means includes a further loop antenna in a non-vertical (preferably horizontal) plane, to provide a radio frequency signal indicative of the strength of the magnetic field of any horizontally polarised electrical field in the radiation from the lightning strike.

Then, apparatus for locating a source of radiation including at least two direction finding apparatus as described, may further include a central control station arranged to receive bearing data from said at least two direction finding apparatus and to calculate therefrom the position of the source of the radiation and the range of the source from the antenna means of each said direction finding apparatus, the central control station further receiving data from the direction finding apparatus representing the relative magnitude of the magnetic field of any horizontally polarised electrical field in the radiation from the lightning strike as detected by said further loop antenna and being arranged to compensate for errors in the calculated bearing resulting from said horizontally polarised electrical field.

An example of this invention will now be described with reference to the drawings, in which:-

Figure 1 is a plan view of a trigonal arrangement of antenna loops for a direction finding apparatus according to the invention;

Figure 2 is a perspective view from above of the antenna of Figure 1;

Figure 3 is a block schematic diagram of a processing unit for developing and processing signals derived from the antenna loops of a single direction finding station together with its associated modem unit; and

Figure 4 is a block schematic diagram of a lightning strike location system incorporating three direction finding stations each linked to a central control station.

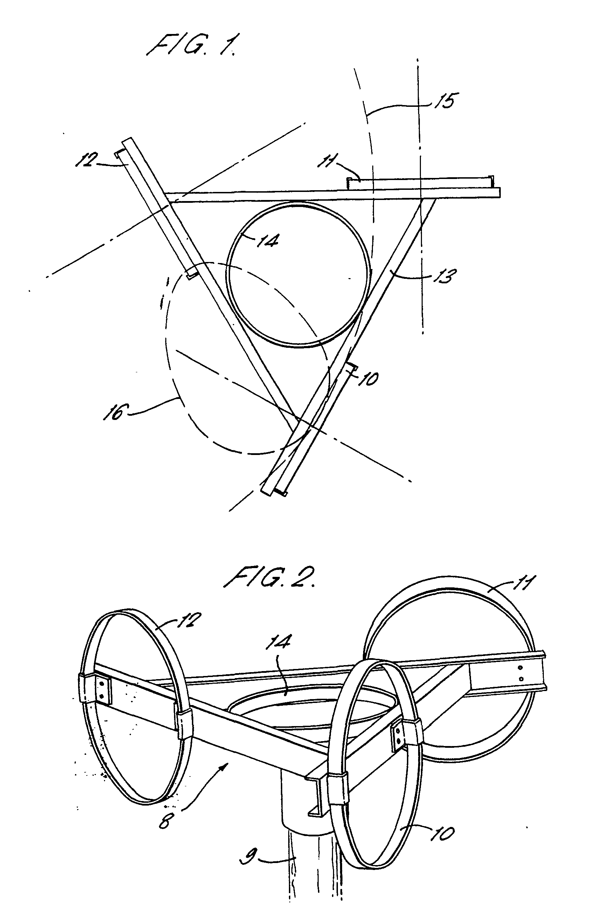

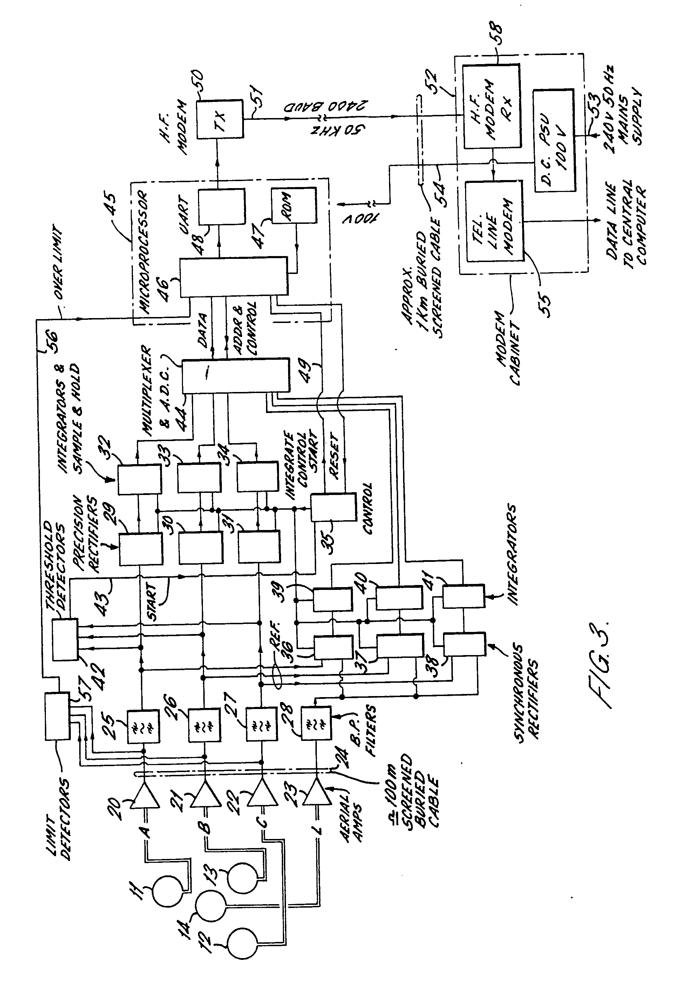

Referring firstly to Figures 1 and 2, a multi-loop antenna system 8 is mounted at the head of a pole 9. The pole is made of a non-magnetic, preferably non-metallic, material conveniently wood, in order to minimise the magnetic field distortions at the antenna. The antenna should be mounted on the pole at an elevation of about 5 metres above the ground. The antenna is formed of four loops. Three loops 10, 11 and 12 are mounted in equiangular vertical planes on a triangularly shaped frame 13. The vertical loops are positioned relative to one another as shown best in Figure 1 in order to minimise the magnetic coupling between each loop and the two others. For this purpose, each loop is arranged to be in a plane tangential to the free magnetic field which would be produced by a current circulating in each of the other loops. Thus, in Figure 1, loop 10 is shown tangential to flux line 15 representing the free magnetic field of the loop 11, and also tangential to the flux line 16 representing the free magnetic field of the loop 12. It will be appreciated that the magnetic field strength of the field generated by any loop diminishes with distance away from the loop in question. Thus, the point of tangential contact between the flux lines 15 and 16 and the plane of the loop 10 is not at the central axis of loop 10 but displaced away from the axis in the direction towards the respective loop generating the field. The correct positioning of the loops relative to one another to minimise magnetic coupling between the loops can be achieved empirically. In practice coupling between the loops is maintained as low as −65 dB.

In addition to the three loops in vertical planes, the antenna system at the head of the pole has a horizontal loop 14 located centrally in the triangular supporting frame 13 of the antenna system and arranged to be in the median plane of the three vertical loops so as again to provide minimal magnetic coupling between the horizontal loop and any of the vertical loops.

In a particular example, each of the four loops comprising 1000 turns of wire on a former of 0.56 metre diameter. Each loop is tuned with a capacitance of typically 3300 pF and is resistively damped to a Q factor of 0.67 with a shunt resistor of typically 18 k ohms. The centre frequency of the tuned loop is 1.95 kHz. Each of the loops is screened against electric fields and hence responds only to varying magnetic fields.

For mechanical stability and weatherproofing, the loops, formers and their supporting structure are fabricated from glass reinforced plastic.

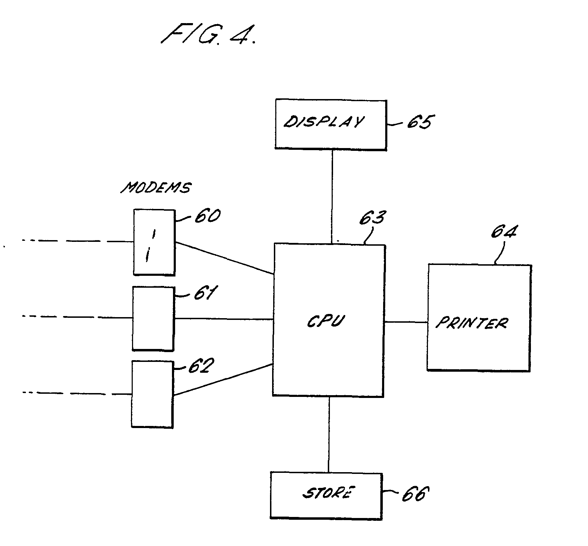

Referring now to figure 3, the loops 11 to 14 are illustrated schematically to the left of the drawing. Four aerial amplifiers 20 to 23 amplify the voltages A, B, C and L induced in the respective loops. The amplifiers 20 to 23 are located on or immediately adjacent to the supporting pole of the antenna and feed the amplified voltage signals on a multiple screened pair cable 24 to a processing unit located some 100 metres distant from the antenna. This separation between the antenna system and the processing unit is needed to attenuate any spurious signals generated in the processing unit which might otherwise reach the aerial assembly and produce incorrect signal voltages. It is also necessary to keep the mass of the metal cabinet of the processing unit well away from the immediate vicinity of the antenna to avoid spurious lightning induced magnetic fields from the cabinet intercepting the loops.

In the processing unit, each of the amplified antenna loop voltages supplied on the multiple screened pair cable is first passed through a respective active matched filter 25, 26, 27, 28 with centre frequency 2 kHz and a band width of 1.2 kHz at the 90% response level. The filter response shapes are approximately rectangular having side slopes of approximately 62 dB per kHz. The four filters for the four signals are accurately matched for shape and frequency response to + or −2 parts in 1000.

The signals passed by the filters 25 to 27, corresponding to the filtered output voltages from the vertical antennas, are fed to respective precision rectifiers 29, 30 and 31 which in turn feed respective sample and hold integrators 32, 33 and 34. The precision rectifiers 29 to 31 and sample and hold integrators 32 to 34 are controlled by a control signal from control circuit 35 to rectify and integrate the signals from the band pass filters for a period of 1.5 mS.

At the same time, the filtered signal from the horizontal loop is synchronously rectified in each of synchronous rectifiers 36 to 38, by comparison with the phase of the signal from each of the vertical loops derived from the filters 25, 26 and 27. The rectified signals from synchronous rectifiers 36 to 38 are in turn supplied to respective sample and hold integrators 39, 40 and 41, the rectifiers 36 to 38 and integrators 39 to 41 again being subject to the control of the control signal from the control circuit 35. The synchronous rectification of the voltage signal from the horizontal loop with reference to the phases of the signals from the three vertical loops effectively preserves the sign of the horizontal loop signal, this being necessary for subsequent use of this signal in correcting the measured bearing for residual polarisation error.

The vertical loop voltage signals from the filters 25, 26 and 27 are additionally supplied to respective threshold detectors 42. The threshold detectors 42 are arranged to generate a start signal on a line 43 in the event that the voltage signal from any one of the filters 25, 26 and 27 exceeds a minimum threshold level. The start signal on line 43 is supplied to the control circuit 35 to generate the control signal controlling the precision rectifiers 29 to 31, the synchronous rectifiers 36 to 38 and the integrators 32 to 34 and 39 to 41.

All the sampled and integrated signals from the integrators 32 to 34 and 39 to 41 are supplied to a multiplexer and analogue to digital convertor 44 for feeding to a micro processor 45. The micro processor 45 includes a CPU 46, a read only memory (ROM) 47 and a universal asynchronous receiver/transmitter (UART) 48. The control circuit 35 signals the CPU 46 on line 49 to read the multiplexed data from the multiplexer and ADC 44 and process this information to derive data defining the bearing of the detected lightening strike relative to the station and various other data as will become apparent. This derived data is serialised by the UART 48 and transmitted by an HF modem 50 (typically 50 kHz carrier) at a data rate of 2400 baud over a screened cable 51 to a modem cabinet 52.

The modem cabinet 52 is preferably located about 1km distant from the antenna system and the processing unit described above and is the closest approach to the antenna for any mains power supply. This is in order to minimise mains noise. Thus, mains power at 240 volts 50 Hz is supplied to the remote modem cabinet 52 on a power line 53 to drive the circuitry in the cabinet and also to supply a direct current power supply unit within the modem generating a DC power supply at typically 100 volts. This 100 volt DC supply is fed on a line 54 from the modem cabinet back to the processing unit for use as its power supply. This is to minimise the alternating field in the vicinity of the aerial loops. The modem cabinet 52 includes HF modem unit 58 to receive data from the processing unit over the 50 kHz line. This data is decoded and fed to a telephone line modem 55 in the cabinet for transmission of the data over a dedicated telephone line to a central control station as will be described in more detail later.

In a full lightning strike location system, typically three direction finding stations as illustrated in figures 1 to 3 are employed situated at various locations to enable the position of lightning strikes to be detected by triangulation. The data from the modem cabinets 52 of each of these stations is transmitted over dedicated telephone lines to three receiving modems 60 to 62 at a central control station as illustrated in figure 4. The data received by the modems 60 to 62 is supplied to a central processing unit 63 in the control station which processes the received data to calculate the position of lightning strikes. This position information is either recorded on a printer 64, displayed on a map display 65 or stored in a digital store 66 for subsequent analysis.

In a typical example of the invention the micro processor unit 45 in the processing unit of each radio direction finding station is arranged to calculate from the relative signal strength data from the four antenna loops the following information:

(a) The bearing of a lightning strike relative to the station. This bearing calculation may be to an accuracy of 0.1°. It should be noted that the calculated bearing has an ambiguity of 180°. However this ambiguity is resolved in the central processing unit 63 of the central control station by comparison with bearing figures from other radio direction finding stations. The bearing of the lightning strike is calculated by the micro processor 45 by applying appropriate trigonometric functions to the signal amplitudes from the three vertical antenna loops. In this calculation, the smallest amplitude from the three vertical loops is not used as a divisor or as a multiplier in the bearing equation. In this way and by the arrangement of the loops equi-angularly, dead zones are avoided.

(b) A value and its polarity derived from taking the ratio of the amplitude of the horizontal loop antenna signal to the vector sum of all the vertical loop signals. The relative polarity of the three synchronously rectified signals supplied to the multiplexer and ADC 44 is also employed to retain the polarity of this value. This value and its polarity can subsequently be employed in the central control station to correct for small bearing errors induced by any residual horizontally polarised wave component in the signal detected by the antenna loops.

(c) Various overload signals detected in the micro processor 45 in response to over limit indications being supplied to the micro processor on a line 56 from limit detectors 57 monitoring the amplitude of the amplified signals received from the aerial amplifiers 20 to 22. Such overload signals may be employed to indicate that a strong (normally local) lightning strike has been detected which exceeds the signal handling capability of the processing circuitry.

(d) Sector numbers for detected lightning strikes indicating the sector in which the bearing of the strike is contained, e.g. 0 to 60° (sector I), 60 to 120° (sector 2) and 120 to 180° (sector 3). These sector numbers are employed in the central processing unit 63 of the central control unit as rough checks on the bearings of detected lightning strikes, particularly useful if the bearing is near a sector boundary. The sector numbers also verify the polarity of the above referred value (b).

(e) The strength of the lightning wave magnetic field vector derived from taking the vector sum of all the amplitude signals from the vertical antenna loops. This strength value is represented in 16, 3 dB intervals, starting at the maximum vector value (corresponding to the limit value) and working downwards.

(f) A summing error signal corresponding to the algebraic sum of the vertical loop signal amplitudes. This error signal should ideally be zero for a perfectly aligned system. If the sum exceeds a predetermined value, this indicates either some very local interference or an imbalance between the vertical channels.

In response to detection by the threshold detectors 42 in any one of the direction finding stations of a signal above the minimum threshold, the micro processor 45 of the respective station duly monitors and calculates each of the above items of data and transmits them via its local modem cabinet 52 over a dedicate telephone line to the central control station illustrated in figure 4. Once the micro processor 45 has completed its calculations and sent all the data, a reset signal is supplied on line 58 to reset the control unit 35 ready for the next detected lightning strike. The whole process of sampling, calculating and transmitting following detection of a lightning strike takes about 24 mS, after which the direction finding station is reset ready for the next strike. Accordingly, each direction finding station can record and measure the bearings of strikes at a maximum rate of 42 per second. This speed of operation permits each direction finding station to individually record the bearings of multiple strikes, i.e. several lightning strokes to the same point on the ground separated by some 50 to 100 mS. The recording of such multiple strikes to the same point on the ground provides a means of checking the intrinsic accuracy of the system since each direction finding station should indicate the same bearing for the multiple strikes and the central control stations should identify the same location.

In a typical arrangement the direction finding stations may be arranged roughly to form an equilateral triangle with three stations for example suitably located at a separation of some 250 to 350 km.

Allowing for wave propagaton times, equipment variations and propagation times along the various telephone lines, the time of arrival of data relating to the same lightning strike from different direction finding stations separated by as much as 600 km will be within a few mS. The central control station CPU 63 is arranged to define a "window time", typically 3 mS, so that strike indications received from different direction finding stations within this window time of one another are considered to be recordings of the same event. Even assuming a very high rate of lightening strikes within the monitored region, equivalent to say 3000 strikes per hour, and a window time of say 3 mS, then the probability of two different strikes falling within a window time of one another is only 0.0025. This is considered to be an acceptable figure especially when such a high strike rate may occur only once in several years and then only for a matter of tens of minutes.

The range of a direction finding station can be as much as 2000 km. However normally the maximum operating range would be reduced to about say 600 km by means of appropriate minimum level threshold settings and sensitivity adjustments.

In the CPU 63 of the central control unit, incoming lightning strike indications are compared and stored. Those indications which satisfy the window condition, i.e. arrive within say 3 mS of each other from different stations, are used to calculate a position for the strike by triangulation. When this first estimate of position of the strike is calculated, the range from the strike to each direction finding station can be calculated and the indicated values of the received strike signal strength (e) from each station can then be adjusted to give an estimate of the actual lightening strike intensity.

Also at this stage the value (b) supplied by each direction finding station can be combined with the range from the d.f. station to the strike and the height of the ionosphere to make a fine adjustment to the indicated bearing of the strike from each station. Generally this adjustment will be of the order of 1° or less. In this way a more accurate position is established.

The adjusted bearings then usually define a small area (with three or more direction finding stations reporting) and an algorithm is used in the CPU 63 to calculate the best point of intersection. This is taken as the strike position.

Checks are carried out by the CpU 63 for overload as indicated by data (c) from each d.f. station and sector and summing checks are carried out. The PU 63 is arranged to annotate strike position information to indicate any irregularity noted.

The display of the calculated information at the central control station may take various forms. The simplest display is a print of a list of x, y co-ordinates, the time of strike, the intensity and any irregularity. The x, y co-ordinates may be in latitude and longitude, or in some local grid system (such as the national grid reference system in the United Kingdom). A disadvantage of the print method is that when there is a high strike rate, the printer may lag behind the recorded strikes by as much as an hour.

A preferred display comprises a map on the face of a VDU (which may ideally be a coloured TV display) with the recorded lightning strikes appearing as dots on the display. A separate area of the screen may be used to display information on selected strikes, chosen by the position of a cursor or a light pen. The display may be continuous or refreshed at say 1 to 60 minute intervals depending upon the amount of lightning activity. Enlargement of particular areas would be possible as would action replays at slower or higher rates than real time.

In this way the development, intensity and direction of travel of an electrical storm could be monitored, enabling warnings to be issued to threatened areas and precautionary measures to be taken. Such information is of particular interest to electricity supply utilities but will also find application in weather forecasting, aviation, military and similar fields.

The lightning strike information may be disseminated by data links to electricity supply control centres, and others for display as indicated above. Further the processed information may be stored in archive files in a computer for future reference and research purposes. It could be provided that such files could be interrogated by the telephone network.

## Claims

1. A lightning strike direction finding apparatus comprising antenna means (8) responsive to the magnetic field of vertically polarised electrical fields of radio frequency energy radiation from a lightning strike to provide radio frequency signals, a processing unit (45), and filter means (25, 26, 27) by way of which said radio frequency signals are transmitted to the processing unit (45), characterised in that the antenna means (8) comprises three or more loop antennas (10, 11, 12) arranged in vertical planes, with at least two in planes at angles other than orthogonal with any third one, the filter means (25, 26, 27) being arranged to discriminate against signals at frequencies above a frequency corresponding to the earth-ionosphere waveguide cut-off frequency for the magnetic fields of horizontally polarised electrical fields of radio frequency energy radiation from the lightning strike, the processing unit (45) being located so as to minimise magnetic field disturbance at the antenna means (8) and the processing unit (45) being arranged to provide signals dependent upon the amplitudes of the radio frequency signals received from the antenna means (8) and to calculate the bearing of the lightning strike from the amplitudes of the radio frequency signals received.

2. Apparatus as claimed in Claim 1, characterised in that said predetermined frequency is in the range from 1.5 kHz to 2.6 kHz.

3. Apparatus as claimed in Claim 2, characterised in that the filter means (25, 26, 27) has a pass band for signals from the antenna means (8) at frequencies in the range 1.4 kHz to 2 6 kHz..

4. Apparatus as claimed in any preceding claim, characterised in that there are three loop antennas (10, 11, 12) in vertical planes which are equi-angularly distributed.

5. Apparatus as claimed in Claim 4, characterised in that each loop antenna (10, 11, 12) is positioned with its vertical plane substantially tangential to each of the magnetic fields produced by currents in each of the other loop antennas.

6. Apparatus as claimed in Claim 5, characterised in that the vertical plane of each loop antenna is tangential with each said field at a point of contact which is displaced from the centre of the loop towards the loop antenna producing the respective field.

7. Apparatus as claimed in any preceding claim, characterised in that there is a respective aerial amplifier (20, 21, 22) for amplifying the radio frequency signal from each loop antenna (10, 11, 12) and cable means (24) for feeding the amplified radio frequency signals from the antenna means (8) to the processing unit.

8. Apparatus as claimed in any preceding claim, characterised in that the processing unit includes threshold detectors (42) for detecting when the amplified radio frequency signal from any loop antenna (10, 11, 12) exceeds a predetermined threshold level, and a control unit (35) responsive to the threshold detectors (42) to initiate processing the radio frequency signals from all the loop antennas (10, 11, 12).

9. Apparatus as claimed in any preceding claim, characterised in that the processing unit includes means to provide digital signals representing the amplitude of the radio frequency signals from the loop antennas (10, 11, 12) and means for calculating from said digitised amplitudes the bearing of the lightning strike relative to the antenna means (8), said processing unit including a d.c. electricity supply.

10. Apparatus as claimed in Claim 9, characterised by a modem unit (52) physically located at a predetermined separation from the antenna means (8) and arranged for sending data over a data communication channel to a remote central control station, and a local data link between the processing unit (45) and the modem unit (52) for transmission of said bearing data from the processing unit (45) to the modem unit for onward transmission to the central control station, the modem unit (52) including a source of mains a.c. supply and means for generating a d.c. supply from the mains a.c. supply, and a supply line interconnecting the modem unit (52) with the processing unit (45) for transmitting said d.c. supply to the processing unit (45).

11. Apparatus as claimed in any preceding claim, characterised in that there are three equiangularly distributed loop antennas (10, 11, 12), said processing unit (45) being arranged to calculate the algebraic sum of the signal magnitudes from each of the loop antennas (10, 11, 12) to provide an error indication.

12. Apparatus as claimed in any preceding claim, characterised by a further loop antenna (14) in a non-vertical plane to provide a radio frequency signal indicative of the strength of the magnetic field of any horizontally polarised electrical field in the radio frequency energy radiation from the lightning strike.

13. Apparatus as claimed in Claim 12, characterised in that said further loop antenna (14) is in a horizontal plane.

14. A system for locating a lightning strike, comprising at least two direction finding apparatus as claimed in Claim 12 or Claim 13, characterised by a central control station arranged to receive bearing data from said at least two direction finding apparatus and to calculate therefrom the position of the lightning strike and the range of the lightning strike from the antenna means (8) of each said direction finding apparatus, the central control station further receiving the radio frequency signals from said further loop antenna of said at least two direction finding apparatus and being arranged to compensate for errors in the calculated bearing resulting from the magnetic field of any horizontally polarised electrical field.

15. Apparatus as claimed in Claim 13, characterised in that the processing unit (45) is arranged to rectify the radio frequency signal output from the said further loop antenna (14) synchronously relative to the phases of the radio frequency output signals of each of the vertical loop antennas (10, 11, 12), whereby to preserve the relative polarity of the signal from said further loop antenna (14).

16. Apparatus as claimed in Claim 15, characterised in that the processing unit (45) is arranged to derive a value corresponding to the ratio of the amplitude of the signal from said further loop antenna (14) with the vector sum of the signals from the vertical loop antennas (10, 11, 12).

**Patentansprüche**

1. Peilvorrichtung zum Orten von Blitzeinschlägen mit Antenneneinrichtungen (8), die auf das Magnetfeld von vertikalpolarisierten elektrischen Feldern einer Hochfrequenzenergiestrahlung von einem Blitzeinschlag ansprechen und Hochfrequenzsignale liefern, mit einer Verarbeitungseinheit (45) und Filtereinrichtungen (25, 26, 27), über die die Hochfrequenzsignale auf die Verarbeitungseinheit (45) übertragen werden, dadurch gekennzeichnet, daß die Antenneneinrichtungen (8) drei oder mehr Schleifenantennen (10, 11, 12) umfassen, die in vertikalen Ebenen angeordnet sind, wobei wenigstens zwei in Ebenen unter anderen Winkeln als dem orthogonalen Winkel zur dritten angeordnet sind, die Filtereinrichtungen (25, 26, 27) so ausgebildet sind, daß sie gegenüber Signalen mit Frequenzen über einer Frequenz unterscheiden, die der Grenzfrequenz des Erdionossphärenwellenleiters für die magnetischen Felder von horizontal polarisierten elektrischen Feldern einer Hochfrequenzenergiestrahlung von einem Blitzeinschlag entspricht, die Verarbeitungseinheit (45) so angeordnet ist, daß magnetische Feldstörungen an den Antenneneinrichtungen (8) so klein wie möglich sind, und die Verarbeitungseinheit (45) so ausgebildet ist, daß sie Signale in Abhängigkeit von den Amplituden der Hochfrequenzsignale liefert, die von den Antenneneinrichtungen (8) empfangen werden, und die Peilrichtung des Blitzeinschlages aus den Amplituden der empfangenen Hochfrequenzsignale berechnet.

2. Vorrichtung nach Anspruch 1, dadurch gekennzeichnet, daß die bestimmte Frequenz im Bereich von 1,5 kHz bis 2,6 kHz liegt.

3. Vorrichtung nach Anspruch 2, dadurch gekennzeichnet, daß die Filtereinrichtungen (25, 26, 27) einen Bandpaß für Signale von den Antenneneinrichtungen (8) mit Frequenzen im Bereich von 1,4 kHz bis 2,6 kHz haben.

4. Vorrichtung nach einem der vorhergehenden Ansprüche, dadurch gekennzeichnet, daß drei Schleifenantennen (10, 11, 12) in vertikalen Ebenen in gleichem Winkelabstand verteilt sind.

5. Vorrichtung nach Anspruch 4, dadurch gekennzeichnet, daß jede Schleifenantenne (10, 11, 12) mit ihrer vertikalen Ebene im wesentlichen tangential zu jedem Magnetfeld angeordnet ist, das durch Ströme in jeder anderen Schleifenantenne erzeugt wird.

6. Vorrichtung nach Anspruch 5, dadurch gekennzeichnet,. daß die vertikale Ebene jeder Schleifenantenne tangential zu jedem Feld an einem Kontaktpunkt verläuft, der von der Mitte der Schleife zu derjenigen Schleifenantenne versetzt ist, die das jeweilige Feld erzeugt.

7. Vorrichtung nach einem vorhergehenden Anspruch, dadurch gekennzeichnet, daß ein jeweiliger Antennenverstärker (20, 21, 22) zum Verstärken des Hochfrequenzsignals von jeder Schleifenantenne (10, 11, 12) und Kabeleinrichtungen (24) vorgesehen sind, die die verstärkten Hochfrequenzsignale von den Antenneneinrichtungen (8) zur Verarbeitungseinheit leiten.

8. Vorrichtung nach einem der vorhergehenden Ansprüche, dadurch gekennzeichnet, daß die Verarbeitungseinheit Schwellenwertdetektoren (42), die feststellen, daß das verstärkte Hochfrequenzsignal von einer Schleifenantenne (10, 11, 12) einen bestimmten Schwellenwert überschreitet, und eine Steuereinheit (35) einschließt, die auf die Schwellenwertdetektoren (42) anspricht und die Verarbeitung der Hochfrequenzsignale von allen Schleifenantennen (10, 11, 12) auslöst.

9. Vorrichtung nach einem der vorhergehenden Ansprüche, dadurch gekennzeichnet, daß die Verarbeitungseinheit Einrichtungen, die digitale Signale liefern, die die Amplitude der Hochfrequenzsignale von den Schleifenantennen (10, 11, 12) wiedergeben, und Einrichtungen einschließt, die aus den digitalisierten Amplituden die Peilrichtung des Blitzeinschlages relativ zu den Antenneneinrichtungen (8) berechnet, wobei die Verarbeitungseinheit eine elektrische Gleichstromversorgung einschließt.

10. Vorrichtung nach Anspruch 9, gekennzeichnet durch eine Modemeinheit (52), die räumlich in einer bestimmten Trennung von den Antenneneinrichtungen (8) angeordnet und so ausgebildet ist, daß sie Daten über einen Datenübertragungskanal einer entfernten zentralen Steuerstation übermittelt, und eine örtliche Datenverbindung zwischen der Verarbeitungseinheit (45) und der Modemeinheit (52) zum Übertragen der Peilrichtungsdaten von der Verarbeitungseinheit (45) auf die Modemeinheit zur Weiterleitung zur zentralen Steuerstation, wobei die Modemeinheit (52) eine Wechselstromnetzversorgungsquelle und Einrichtungen einschließt, die eine Gleichstromversorgung aus der Wechselstromnetzversorgung erzeugen, und eine Versorgungsleitung die Modemeinheit (52) mit der Verarbeitungseinheit (45) verbindet, um die Gleichstromversorgung auf die Verarbeitungseinheit (45) zu übertragen.

11. Vorrichtung nach einem der vorhergehenden Ansprüche, dadurch gekennzeichnet, daß drei in gleichem Winkelabstand verteilte Schleifenantennen (10, 11, 12) vorgesehen sind, wobei die Verarbeitungseinheit (45) so ausgebildet ist, daß sie die algebraische Summe der Signalamplituden von jeder Schleifenantenne (10, 11, 12) berechnet, um Fehleranzeigen zu liefern.

12. Vorrichtung nach einem der vorhergehenden Ansprüche gekennzeichnet durch eine weitere Schleifenantenne (14) in einer nichtvertikalen Ebene, um ein Hochfrequenzsignal zu liefern, das die Stärke des magnetischen Feldes eines horizontalpolarisierten elektrischen Feldes in der Hochfrequenzenergiestrahlung vom Blitzeinschlag angibt.

13. Vorrichtung nach Anspruch 12, dadurch gekennzeichnet, daß die weitere Schleifenantenne (14) in einer horizontalen Ebene liegt.

14. System zum Orten eines Blitzschlages, das wenigstens zwei Peilvorrichtungen nach Anspruch 12 oder Anspruch 13 umfaßt, gekennzeichnet durch eine zentrale Steuerstation, die so ausgebildet ist, daß sie Peilrichtungsdaten von den wenigstens zwei Peilvorrichtungen empfängt und daraus die Position des Blitzeinschlages und den Abstand des Blitzeinschlages von den Antenneneinrichtungen (8) jeder Peilvorrichtung berechnet, wobei die zentrale Steuerstation weiterhin Hochfrequenzsignale von der weiteren Schleifenantenne der wenigstens zwei peilvorrichtungen empfängt und so ausgebildet ist, daß sie Fehler in der berechneten Peilrichtung kompensiert, die eine Folge des magnetischen Feldes eines horizontalpolarisierten elektrischen Feldes sind.

15. Vorrichtung nach Anspruch 13, dadurch gekennzeichnet, daß die Verarbeitungseinheit (45) so ausgebildet ist, daß sie die Hochfrequenzausgangssignale der weiteren Schleifenantenne (14) synchron relativ zu den Phasen der Hochfrequenzausgangssignale jeder vertikalen Schleifenantenne (10, 11, 12) gleichrichtet, wodurch die relative Polarität des Signals von der weiteren Schleifenantenne (14) beibehalten wird.

16. Vorrichtung nach Anspruch 15, dadurch gekennzeichnet, daß die Verarbeitungseinheit (45) so ausgebildet ist, daß sie einen Wert ableitet, der dem Verhältnis der Amplitude des Signals von der weiteren Schleifenantenne (14) zur Vektorsumme der Signale von den vertikalen Schleifenantennen (10, 11, 12) entspricht.

**Revendications**

1. Appareil goniomètrique de localisation des coups de foudre comprenant un moyen antenne (8) sensible au champ magnétique de champs électriques à polarisation verticale du rayonnement d'énergie à fréquence radio d'un coup de foudre pour délivrer des signaux à fréquence radio, une unité de traitement (45) et un moyen filtre (25, 26, 27) par l'intermédiaire duquel les signaux de fréquence radio sont transmis à l'unité de traitement (45), caractérisé en ce que le moyen antenne (8) comprend trois ou davantage d'antennes cadres (10, 11, 12) disposées dans des plans verticaux, avec au moins deux dans un plan formant des angles autres qu'orthogonaux avec une troisième quelconque, le moyen filtre (25, 26, 27) étant agencé pour discriminer à l'égard des signaux à des fréquences situées au-dessus d'une fréquence correspondant à la fréquence de coupure du guide d'onde terre-ionosphère pour les champs magnétiques des champs électriques à polarisation horizontale du rayonnement d'énergie à fréquences radio des coups de foudre, l'unité de traitement (45) étant située de manière à minimiser la perturbation du champ magnétique au niveau du moyen antenne (8) et l'unité de traitement (45) étant agencée pour fournir des signaux dépendants des amplitudes des signaux de fréquence radio reçus du moyen antenne (8) et pour calculer le relèvement du coup de foudre à partir des amplitudes des signaux de fréquence radio reçus.

2. Appareil selon la revendication 1, caractérisé en ce que ladite fréquence prédéterminée se situe dans la gamme allant de 1,5 à 2,6 kHz.

3. Appareil selon la revendication 2, caractérisé en ce que le moyen filtre a une bande passante pour les signaux provenant du moyen antenne à des fréquences se trouvant dans la gamme de 1,4 à 2,6 kHz.

4. Appareil selon une quelconque des revendications précédentes, caractérisé en ce qu'il y a trois antennes cadres (10, 11, 12) dans des plans verticaux qui sont distribuées équiangulairement.

5. Appareil selon la revendication 4, caractérisé en ce que chaque antenne cadre (10, 11, 12) est placée avec son plan vertical sensiblement tangentiel à chacun des champs magnétiques produits par les courants dans chacune des autres antennes.

6. Appareil selon la revendication 5, caractérisé en ce que le plan vertical de chaque antenne cadre est tangentiel par rapport à chacun desdits champs en un point de contact qui est déplacé du centre du cadre par rapport à l'antenne cadre produisant le champ respectif.

7. Appareil selon une quelconque des revendications précédentes, caractérisé en ce qu'il y a un amplificateur d'antenne respectif (20, 21, 22) pour amplifier le signal de fréquence radio de chaque antenne cadre (10, 11, 12) et un moyen câble (24) pour amener les signaux de fréquence radio amplifiés du moyen d'antenne (8) vers l'unité de traitement.

8. Appareil selon une quelconque des revendications précédentes, caractérisé en ce que l'unité de traitement inclut des détecteurs à seuil (42) pour détecter lorsque le signal de fréquence radio amplifié en provenance d'une antenne câble quelconque (10, 11, 12) excède un niveau de seuil prédéterminé et une unité de commande (35) sensible au détecteur de seuil (42) pour déclencher le traitement des signaux de fréquence radio en provenance de toutes les antennes cadres (10, 11, 12).

9. Appareil selon l'une quelconque des revendications précédentes, caractérisé en ce que l'unité de traitement inclut des moyens pour élaborer des signaux numériques représentant l'amplitude des signaux de fréquence radio en provenance des antennes cadres (10, 11, 12) et des moyens pour calculer à partir de ces amplitudes numérisées le relèvement du coup de foudre par rapport au moyen antenne (8), ladite unité de traitement incluant une alimentation électrique à courant continu.

10. Appareil selon la revendication 9, caractérisé par une unité modem (52) physiquement placée à une séparation prédéterminée du moyen antenne (8), et agencée pour envoyer des données par la voie d'un canal de communication de données vers une station centrale éloignée de commande, et une liaison locale de données entre l'unité de traitement (45) et l'unité modem (52) pour transmission desdites données de relèvement à partir de l'unité de traitement (45) vers l'unité modem pour transmission vers la station centrale de commande, l'unité modem (52) incluant une source d'alimentation alternative de secteur et un moyen pour générer une alimentation à courant continu à partir de l'alimentation secteur, et une ligne d'alimentation interconnectant l'unité modem (52) avec l'unité de traitement (45) pour transmettre ladite alimentation en courant continu à l'unité de traitement (45).

11. Appareil selon l'une quelconque des revendications précédentes, caractérisé en ce qu'il y a trois antennes cadres (10, 11, 12) distribuées équiangulairement, ladite unité de traitement étant agencée pour calculer la somme algébrique des amplitudes de signal en provenance de chacune des antennes cadres (10, 11, 12) pour fournir une indication d'erreur.

12. Appareil selon l'une quelconque des revendications prédédentes, caractérisé par une autre antenne cadre (14) dans un plan non vertical pour fournir un signal de fréquence radio indicatif de l'intensité du champ magnétique d'un quelconque champ électrique à polarisation horizontale dans le rayonnement d'énergie à fréquence radio du coup de foudre.

13. Appareil selon la revendication 12, caractérisé en ce que ladite antenne cadre (14) est dans un plan horizontal.

14. Un système pour la localisatiion d'un coup de foudre comprenant au moins deux appareils goniométriques selon la revendication 12 ou la revendication 13, caractérisé par une station centrale de commande agencée pour recevoir les données de relèvement desdits appareils goniométriques au nombre d'au moins deux et pour en déduire la position du coup de foudre et la distance de celui-ci à partir du moyen antenne de chaque appareil goniométrique précité, la station centrale de commande recevant en outre les signaux de fréquence radio de ladite autre antenne cadre desdits appareils goniométriques au nombre d'au moins deux et étant agencée pour compenser les erreurs dans les relèvements calculés résultant du champ magnétique d'un quelconque champ magnétique à polarisation orientable.

15. Appareil selon la revendication 13, caractérisé en ce que l'unité de traitement (45) est agencée pour redresser le signal de fréquence radio issue de ladite autre antenne cadre (14) de manière synchrone par rapport aux phases des signaux de fréquence radio issus de chacune des antennes cadres verticales (10, 11, 12) de manière à préserver la polarité relative du signal de ladite autre antenne cadre (14).

16. Appareil selon la revendication 15, caractérisé en ce que l'unité de traitement (45) est agencée pour dériver une valeur correspondant au rapport de l'amplitude du signal de ladite autre antenne cadre (14) et de la somme vectorielle des signaux desdites antennes cadres verticales (10, 11, 12).

FIG. 1.

FIG. 2.

1

FIG.3.

LIMIT DETECTORS

THRESHOLD DETECTORS

INTEGRATORS & SAMPLE & HOLD

OVER LIMIT 56

PRECISION RECTIFIERS

MULTIPLEXER & A.D.C.

MICROPROCESSOR 45

H.F. MODEM

UART 48

TX 50

START

DATA

ADDR & CONTROL

ROM 47

INTEGRATE CONTROL START

RESET

CONTROL

AERIAL AMPS

B.P. FILTERS

± 100m SCREENED BURIED CABLE

SYNCHRONOUS RECTIFIERS

INTEGRATORS

REF.

APPROX. 1Km BURIED SCREENED CABLE

MODEM CABINET

TEL. LINE MODEM 55

H.F. MODEM Rx 58

D.C. PSU 100 V

DATA LINE TO CENTRAL COMPUTER

240v 50Hz MAINS SUPPLY 53

50 KHz 2400 BAUD

EP 0 161 940 B1

FIG. 4.

MODEMS

DISPLAY — 65

60

61

62

63

CPU

64

PRINTER

STORE — 66